(19)

Europäisches Patentamt

European Patent Office

Office européen des brevets

(11) **EP 4 160 740 A1**

(12) **EUROPEAN PATENT APPLICATION**

(43) Date of publication:
**05.04.2023 Bulletin 2023/14**

(21) Application number: **22193281.7**

(22) Date of filing: **31.08.2022**

(51) International Patent Classification (IPC):
**H01M 4/505** (2010.01)   **H01M 10/0525** (2010.01)
**H01M 4/525** (2010.01)   **H01M 10/0568** (2010.01)
**H01M 10/0567** (2010.01)   **H01M 10/0569** (2010.01)

(52) Cooperative Patent Classification (CPC):
**H01M 10/0525; H01M 4/505; H01M 4/525;**
**H01M 10/0567; H01M 10/0568; H01M 10/0569;**
H01M 2300/0037; Y02E 60/10

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.08.2021 CN 202111011717**

(71) Applicant: **Ningde Amperex Technology Ltd.**
**Ningde City, Fujian 352100 (CN)**

(72) Inventors:
• **XU, Chunrui**
 **Ningde City, Fujian Province,, 352100 (CN)**
• **HU, Xi**
 **Ningde City, Fujian Province,, 352100 (CN)**
• **TANG, Chao**
 **Ningde City, Fujian Province,, 352100 (CN)**

(74) Representative: **Icosa**
 **83 avenue Denfert-Rochereau**
 **75014 Paris (FR)**

(54) **ELECTROCHEMICAL APPARATUS AND ELECTRONIC APPARATUS**

(57)   An electrochemical apparatus includes a positive electrode plate, a negative electrode plate, a separator, and an electrolyte. The negative electrode plate includes a negative electrode active material layer, and the negative electrode active material layer includes a negative electrode active material, where mass of the negative electrode active material is a g. The separator is disposed between the positive electrode plate and the negative electrode plate. The electrolyte includes ethylene carbonate, where based on a mass of the electrolyte, a mass percentage of the ethylene carbonate is b%, and $1.6 \leq b/a \leq 6.4$. A ratio of the mass percentage of the ethylene carbonate in the electrolyte to the mass of the negative electrode active material is controlled, so that cycling performance, a thickness swelling rate after high-temperature storage, a capacity retention rate after storage, and safety performance of the electrochemical apparatus can be improved.

EP 4 160 740 A1

**Description**

**BACKGROUND**

**TECHNICAL FIELD**

This application relates to the field of electrochemical energy storage, and in particular, to an electrochemical apparatus and an electronic apparatus.

**BACKGROUND ART**

Currently, electrochemical apparatuses (for example, lithium-ion batteries) are widely used in the fields such as electric vehicles, consumer electronic products, and energy storage apparatuses. With advantages such as high energy density and zero memory effect, lithium-ion batteries have gradually become mainstream batteries in the foregoing fields. In addition, in some fields, use environments or working conditions are relatively harsh. How to improve high-temperature storage performance, cycling performance, charging performance, and safety performance of the lithium-ion batteries while maintaining the high energy density for the lithium-ion batteries has become a problem that needs to be solved urgently in the industry.

**SUMMARY**

Some embodiments of this application provide an electrochemical apparatus, where the electrochemical apparatus includes a positive electrode plate, a negative electrode plate, a separator, and an electrolyte. The negative electrode plate includes a negative electrode active material layer, and the negative electrode active material layer includes a negative electrode active material, where mass of the negative electrode active material is a g. The separator is disposed between the positive electrode plate and the negative electrode plate. The electrolyte includes ethylene carbonate, where based on a mass of the electrolyte, a mass percentage of the ethylene carbonate is b%, and $1.6 \leq b/a \leq 6.4$.

In some embodiments of this application, $1 \leq b \leq 25$.

In some embodiments of this application, the electrolyte further includes at least one selected from the group consisting of vinylene carbonate and fluoroethylene carbonate, and based on the mass of the electrolyte, a mass percentage of vinylene carbonate is m%, a mass percentage of fluoroethylene carbonate is n%, m + n = c, and $0.01 \leq c < 2$.

In some embodiments of this application, the electrolyte further includes at least one selected from the group consisting of vinylene carbonate and fluoroethylene carbonate, and based on the mass of the electrolyte, a mass percentage of vinylene carbonate is m%, and a mass percentage of fluoroethylene carbonate is n%. In some embodiments, $0 \leq m < 2$; or in some embodiments, $0 \leq n < 2$.

In some embodiments of this application, $0.001 \leq c/a \leq 0.36$.

In some embodiments of this application, based on the mass of the electrolyte, in some embodiments of this application, m < n.

In some embodiments of this application, the electrolyte further includes a sulfur-oxygen double bond-containing compound, and the sulfur-oxygen double bond-containing compound includes at least one selected from the group consisting of 1,3-propane sultone (PS), 1,4-butane sultone (BS), ethylene sulfate (DTD), methylene methane disulfonate (MMDS), 1,3-propane disulfonic anhydride (PA), 2-methyl butane sultone, and propenyl-1,3-sultone (PES).

In some embodiments of this application, based on the mass of the electrolyte, a mass percentage of the sulfur-oxygen double bond-containing compound is d%, the positive electrode plate includes a positive electrode active material layer, the positive electrode active material layer includes a positive electrode active material, a mass of the positive electrode active material is e g, and $0.1 \leq d/e \leq 0.6$.

In some embodiments of this application, the positive electrode active material includes element cobalt.

In some embodiments of this application, the electrolyte further includes a lithium salt, where the lithium salt includes at least one selected from the group consisting of lithium difluorophosphate ($LiPO_2F_2$), lithium difluorooxalatoborate (LiDFOB), lithium bisoxalatoborate (LiBOB), lithium bis(fluorosulfonyl)imide (LiFSI), lithium bistrifluoromethanesulfonimide (LiTFSI), lithium tetrafluoroborate ($LiBF_4$), lithium tetraborate ($B_4Li_2O_7$), lithium borate ($Li_3BO_3$), and lithium trifluoromethanesulfonate ($CF_3LiO_3S$), and based on the mass of the electrolyte, a mass percentage of the lithium salt ranges from 0.01% to 3%.

In some embodiments of this application, the electrolyte further includes a polynitrile compound, where the polynitrile compound includes at least one selected from the group consisting of succinonitrile (SN), adiponitrile (ADN), 1,2-bis(cyanoethoxy)ethane (DENE), 1,4-dicyano-2-butene, 1,3,6-hexanetricarbonitrile (HTCN), and 1,2,3-tris(2-cyanoethoxy)propane, and based on the mass of the electrolyte, a mass percentage of the polynitrile compound ranges from 0.01% to 6%.

Some embodiments of this application provide an electronic apparatus, including the foregoing electrochemical apparatus.

In some embodiments of this application, a ratio of a mass percentage of ethylene carbonate in the electrolyte to mass of the negative electrode active material is controlled, so that cycling performance, a thickness swelling rate after high-temperature storage, a capacity retention rate after storage, and safety performance of the electrochemical apparatus can be improved.

**DETAILED DESCRIPTION**

The following embodiments may help persons skilled in the art to understand this application more comprehensively, but impose no limitation on this application in any manner.

To maintain good high-temperature performance of an electrochemical apparatus, a solvent or an additive with better stability needs to be used in an electrolyte to protect an electrode interface to suppress a side reaction between the electrolyte and an active material. However, different solvents and additives interact with the active material in different manners. Percentages of the solvent or the additive and an electrode active material are among important parameters affecting the foregoing protective effect. When an electrolyte composition cannot form a good protective interface on the surface of the electrode plate, charge/discharge performance and storage performance of the electrochemical apparatus will be affected to different extent, thereby affecting normal operation of the electrochemical apparatus and causing potential safety hazards such as lithium precipitation during charging. In some embodiments of this application, an electrolyte solvent and additive are better matched with a positive electrode active material and a negative electrode active material, and a high energy density of an electrochemical apparatus is maintained while improving comprehensive performance of the electrochemical apparatus, so that the electrochemical apparatus has good high-temperature storage performance, cycling performance, charging performance, and safety performance.

An embodiment of this application provides an electrochemical apparatus, and the electrochemical apparatus includes a positive electrode plate, a negative electrode plate, a separator, and an electrolyte, where the separator is disposed between the positive electrode plate and the negative electrode plate. In some embodiments, the negative electrode plate may include a negative electrode active material layer, and the negative electrode active material layer includes a negative electrode active material, where mass of the negative electrode active material is a g. In some embodiments, the negative electrode active material may include at least one of graphite, hard carbon, silicon, silicon monoxide, or silicone.

In some embodiments, the electrolyte may include ethylene carbonate (EC). In some embodiments, based on the mass of the electrolyte, a mass percentage of the ethylene carbonate is b%, and b/a ranges from 1.6 to 6.4. In some embodiments, with increase of the ratio b/a, comprehensive performance of the electrochemical apparatus such as cycling performance, high-temperature storage performance under different states of charge (SOC), a capacity retention rate after storage, and safety performance is significantly improved. The reason may be that the EC protects a negative electrode interface and has a relatively good passivation effect on a lithium precipitation interface of the negative electrode when b/a is within a given range. When b/a is excessively small, the EC cannot protect the negative electrode interface, thereby adversely affecting cycling performance of the electrochemical apparatus at room temperature and high temperature, and due to a poor passivation effect on the lithium precipitation interface of the negative electrode, storage performance and safety performance of the electrochemical apparatus in a low state of charge are affected; or when b/a > 6.4, the cycling performance of the electrochemical apparatus cannot be further improved, the storage performance and the safety performance in the high state of charge are affected, and the reason may be that when b/a is excessively large, interface kinetic performance between the electrolyte and the negative electrode deteriorates, causing lithium precipitation during charging and violent reactions during storage at high temperature, causing thermal failure of the electrochemical apparatus. In some embodiments, b/a may range from 2 to 6, from 2.5 to 5.5, from 3 to 5, from 3.5 to 4.5, or the like.

In some embodiments, the negative electrode plate may further include a negative electrode current collector, and the negative electrode current collector may be at least one of copper foil, nickel foil, or a carbon-based current collector. In some embodiments, the negative electrode active material layer may be located on one side or two sides of the negative electrode current collector. In some embodiments, the negative electrode active material layer may further include a conductive agent and a binder. In some embodiments, the conductive agent in the negative electrode active material layer may include at least one of conductive carbon black, Ketjen black, laminated graphite, graphene, carbon nanotubes, or carbon fiber. In some embodiments, the binder in the negative electrode active material layer may include at least one selected from the group consisting of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, and polyfluorene. In some embodiments, a mass ratio of the negative electrode active material to the conductive agent to the binder in the negative electrode active material layer may be 78-98.5:0.1-10:0.1-10. It should be understood that the foregoing description is merely an example. Any other appropriate materials and mass ratios may be used.

In some embodiments, b ranges from 1 to 25, that is, based on the mass of the electrolyte, a mass percentage of ethylene carbonate (EC) ranges from 1% to 25%. When the mass percentage of the EC is excessively small, the EC provides relatively limited protection on the negative electrode interface and a relatively limited passivation effect on the lithium precipitation interface of the negative electrode; or when the mass percentage of the EC is excessively large, a side reaction of the electrolyte occurs during cycling of the electrochemical apparatus, causing consumption of the electrolyte and swelling of the electrochemical apparatus. In some embodiments, b may range from 5 to 20, from 8 to 18, from 10 to 15 or 13, or the like.

In some embodiments, a is less than or equal to 15, that is, mass of the negative electrode active material is less than or equal to 15 g. Because EC can collaboratively function with the negative electrode active material only when b/a ranges from 1.6 to 6.4, to implement better interface performance, when the mass of the negative electrode active material is excessively large, an excessively great concentration of the EC causes a side reaction of the electrolyte during cycling. In some embodiments, a may range from 1 to 15, from 2 to 14, from 3 to 12, from 4 to 10, or the like.

In some embodiments, the electrolyte may further include at least one of vinylene carbonate (VC) or fluoroethylene carbonate (FEC). In some embodiments, based on the mass of the electrolyte, a mass percentage of vinylene carbonate is m%, where $0 \leq m < 2$; and based on the mass of the electrolyte, a mass percentage of fluoroethylene carbonate is n%, where $0 \leq n < 2$, $m + n = c$, and $0.01 \leq c < 2$. Based on the interface formed by the EC and the negative electrode active material, the VC and/or FEC can well repair a solid electrolyte membrane at an electrode interface damaged during cycling and storage, which suppresses a side reaction of the electrolyte at the electrode interface and suppresses lithium deposition at the negative electrode interface. However, when percentages of the VC and FEC are excessively great, impedance of the negative electrode interface is excessively great, there is excessive residue after formation, and oxidization and gassing are likely to occur at the positive electrode interface, affecting charging performance after storage and also causing gassing after storage and potential safety hazards. In some embodiments, c may range from 0.05 to 1.8, from 0.1 to 1.5, from 0.2 to 1.3, from 0.3 to 1, from 0.5 to 0.8, or the like.

In some embodiments, c/a ranges from 0.001 to 0.36. When c/a ranges from 0.001 to 0.36, but c/a is excessively great, relative percentages of the VC and/or FEC are excessively great, affecting performance of the positive electrode interface, thereby affecting charging performance after storage and also causing gassing after storage and potential safety hazards. In some embodiments, c/a may range from 0.05 to 0.3, from 0.1 to 0.25, from 0.15 to 0.2, or the like.

In some embodiments, based on the foregoing description, when m < n, the electrolyte forms a composite interface protection film with relatively low impedance on the electrode surface during the formation and cycling, improving cycling performance of the electrochemical apparatus to some extent, and also significantly improving a storage characteristic of the electrochemical apparatus at high temperature.

In some embodiments, the electrolyte may further include a sulfur-oxygen double bond-containing compound, for example, sulfonic ester. In some embodiments, the sulfur-oxygen double bond-containing compound may include at least one of 1,3-propane sultone, 1,4-butane sultone, ethylene sulfate, methylene methane disulfonate, 1,3-propane disulfonic anhydride, 2-methylbutane sultone, or propenyl-1,3-sultone.

In some embodiments, based on the mass of the electrolyte, a mass percentage of the sulfur-oxygen double bond-containing compound is d%. In some embodiments, the positive electrode plate includes a positive electrode active material layer, the positive electrode active material layer includes a positive electrode active material, mass of the positive electrode active material is e g, and d/e ranges from 0.1 to 0.6. On the basis of the EC and the negative electrode active material satisfying that b/a ranges from 1.6 to 6.4, when the ratio d/e is excessively small, the sulfur-oxygen double bond-containing compound has a relatively limited function for stabilizing a CEI film and a SEI film, which does not significantly improve performance of the lithium-ion battery; or when the ratio of d/e is excessively large, storage and safety performance of the electrochemical apparatus at a low SOC is significantly affected. In some embodiments, d/e may range from 0.2 to 0.5, from 0.3 to 0.4, or the like.

In some embodiments, the positive electrode active material includes element cobalt. In some embodiments, the positive electrode active material may include at least one of lithium cobalt oxide, lithium nickel cobalt manganate, lithium nickel cobalt aluminate, lithium manganate oxide, lithium nickel manganate, or lithium iron phosphate. In some embodiments, $D_v50$ and $D_v90$ of the positive electrode active material satisfy that $0.4 \ \mu m \leq D_v50 \leq 20 \ \mu m$ and $2 \ \mu m \leq D_v90 \leq 40 \ \mu m$, where $D_v50$ and $D_v90$ refer to particle sizes corresponding to 50% and 90% accumulated from left to right in the volume distribution, respectively. In some embodiments, the positive electrode active material includes element A, the element A includes at least one selected from the group consisting of Mg, Ti, Cr, B, Fe, Zr, Y, Na, and S, and based on the mass of the positive electrode active material, a mass percentage of the element A is less than 0.5%. In some embodiments, the positive electrode plate may further include a positive electrode current collector, where the positive electrode current collector may be Al foil, or certainly may be another current collector commonly used in the art. In some embodiments, thickness of the positive electrode current collector may range from 1 $\mu m$ to 200 $\mu m$. In some embodiments, the positive electrode active material layer may be located on one side or two sides of the positive electrode current collector. In some embodiments, the positive electrode active material layer may include a conductive agent and a binder. In some embodiments, the conductive agent in the positive electrode active material layer may include at least one of conductive carbon black, Ketjen black, laminated graphite, graphene, carbon nanotubes, or carbon fiber. In some embodiments, the binder in the positive electrode active material layer may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio of the positive electrode active material to the conductive agent to the binder in the positive electrode active material layer may be 78-99:0.1-10:0.1-10. In some embodiments, thickness of the positive electrode active material layer may range from 10 $\mu$m to 200 $\mu$m. It should be understood that the descriptions above are merely examples, and any other suitable material, thickness, and mass ratio may be used for the positive electrode active material layer.

In some embodiments, the electrolyte further includes a lithium salt, the lithium salt includes at least one selected from the group consisting of lithium difluorophosphate, lithium difluorooxalatoborate, lithium bisoxalatoborate, lithium bis(fluorosulfonyl)imide, lithium bistrifluoromethanesulfonimide, lithium tetrafluoroborate, lithium tetraborate, lithium borate, and lithium trifluoromethanesulfonate. Adding the lithium salt to the electrolyte can significantly improve cycling performance, high-temperature storage performance, and safety performance of the electrochemical apparatus. This is because the lithium salt forms a SEI film and a CEI film with low impedance on surfaces of positive and negative electrodes, improving charging performance and reducing side reactions caused by lithium precipitation. In addition, the stable protection film can effectively reduce side reactions between the electrolyte and the positive and negative electrodes during storage and cycling while reducing consumption of active lithium and improving a capacity retention rate.

In some embodiments, based on the mass of the electrolyte, a mass percentage of the lithium salt ranges from 0.01% to 3%. An excessively small mass percentage of the lithium salt has a relatively limited improvement effect on charging performance; and an excessively great mass percentage of the lithium salt causes excessively great viscosity of the electrolyte, which affects kinetic performance of the electrochemical apparatus. In some embodiments, based on the mass of the electrolyte, the mass percentage of the lithium salt may range from 0.05% to 2.5%, from 0.1% to 2%, from 0.5% to 1.8%, from 1% to 1.5%, or the like.

In some embodiments, the electrolyte may further include a polynitrile compound, and the polynitrile compound includes at least one selected from the group consisting of succinonitrile, adiponitrile, 1,2-bis(cyanoethoxy)ethane, 1,4-dicyano-2-butene, 1,3,6-hexanetricarbonitrile, and 1,2,3-tris(2-cyanoethoxy)propane. Adding the polynitrile compound to the electrolyte can significantly improve high-temperature storage performance and safety performance of the electrochemical apparatus. This is because the polynitrile compound can be well complexed with the positive electrode active material to reduce oxidation activity of the positive electrode active material, reduce side reactions, and also prevent positive electrode transition metal from precipitating and then depositing at the negative electrode, which otherwise causes damage to the SEI film, thereby reducing gassing and improving a capacity retention rate. In addition, when the EC is used along with the polynitrile compound, the EC can suppress decomposition of the polynitrile compound at the negative electrode interface to reduce increase in impedance of the negative electrode, so that a greater amount of polynitrile compound effectively acts on the positive electrode. Passivation caused by the polynitrile compound for the positive electrode can reduce oxidation of the EC at the positive electrode interface, so that a greater amount of the EC is used to protect the negative electrode interface, thereby exerting advantages of the two substances to greatest extent and achieving optimal electrical performance.

In some embodiments, based on the mass of the electrolyte, a mass percentage of the polynitrile compound ranges from 0.01% to 6%. When the mass percentage of the polynitrile compound is excessively small, the polynitrile compound has a relatively limited improvement effect; and when the mass percentage of the polynitrile compound is excessively large, the improvement effect of the polynitrile compound is not further enhanced, and it is also not conducive to improvement of energy density of the electrochemical apparatus. In some embodiments, based on the mass of the electrolyte, the mass percentage of the polynitrile compound may range from 0.05% to 5%, from 0.1% to 4%, from 0.5% to 3%, from 1% to 2%, or the like.

In some embodiments, the electrolyte may further include a P-O bond-containing compound, and the P-O bond-containing compound includes at least one selected from the group consisting of tris(trimethylsilyl) phosphate (TMSP), tris(trimethylsilyl) phosphite (TTSPi), triallyl phosphate, tripropargyl phosphate, triallyl phosphite, and tripropargyl phosphite.

In some embodiments, the electrolyte may further include a non-aqueous solvent. The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-trifluoromethyl ethylence carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments, the separator may include at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits and can improve stability of a battery through a shutdown effect. In some embodiments, thickness of the separator ranges from approximately 5 μm to 500 μm.

In some embodiments, a surface of the separator may further include a porous layer. The porous layer is disposed on at least one surface of a substrate of the separator and includes inorganic particles and a binder, where the inorganic particles are selected from at least one of aluminum oxide ($Al_2O_3$), silicon dioxide ($SiO_2$), magnesium oxide (MgO), titanium oxide ($TiO_2$), hafnium dioxide ($HfO_2$), stannic oxide ($SnO_2$), cerium dioxide ($CeO_2$), nickel oxide (NiO), zinc oxide (ZnO), calcium oxide (CaO), zirconium dioxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a pore of the separator has a diameter ranging from approximately 0.01 μm to 1 μm. The binder of the porous layer is selected from at least one of polyvinylidene fluoride, vinylidene fluoride-hexafluoropropylene copolymer, polyamide, polyacrylonitrile, polyacrylate, polyacrylic acid, polyacrylate, sodium carboxymethylcellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, an electrode assembly of the electrochemical apparatus is a wound electrode assembly, a stacked electrode assembly, or a folded electrode assembly. In some embodiments, the positive electrode plate and/or the negative electrode plate of the electrochemical apparatus may be a multi-layer structure formed through winding or stacking, or may be a single-layer structure formed by stacking a single-layer positive electrode plate, a separator, and a single-layer negative electrode plate. In some embodiments, the electrochemical apparatus includes a lithium-ion battery. However, this application is not limited thereto.

In some embodiments of this application, a lithium-ion battery is used as an example. A positive electrode plate, a separator, and a negative electrode plate are wound or stacked in sequence to form an electrode assembly, and the electrode assembly is then packaged, for example, in an aluminum-plastic film, followed by injection of an electrolyte, formation, and packaging, so that the lithium-ion battery is prepared. Then, a performance test is performed on the prepared lithium-ion battery.

Persons skilled in the art should understand that the method for preparing the electrochemical apparatus (for example, the lithium-ion battery) described above is only an embodiment. Without departing from the content disclosed in this application, other methods commonly used in the art may be used.

An embodiment of this application further provides an electronic apparatus including the foregoing electrochemical apparatus. The electronic apparatus in some embodiments of this application is not particularly limited and may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

Some specific examples and comparative examples are listed below to better illustrate this application. A lithium-ion battery is used as an example.

Example 1-1

Preparation of positive electrode plate: Aluminum foil of 10 μm was used as a positive electrode current collector, and a positive electrode active material $LiNi_{0.5}Co_{0.2}Mn_{0.3}O_2$, a conductive agent conductive carbon black, and a binder polyvinylidene fluoride were dissolved in an N-methylpyrrolidone (NMP) solution at a mass ratio of 97:1.4:1.6 to form a positive electrode slurry. The positive electrode slurry was applied on two sides of the positive electrode current collector with a single-sided coating thickness being 80 μm to obtain a positive electrode active material layer. Then after drying at 85°C, cold pressing, and cutting, the positive electrode plate was obtained.

Preparation of negative electrode plate: Graphite, a conductive agent conductive carbon black, sodium carboxymethyl cellulose (CMC), and a binder styrene-butadiene rubber (SBR) were dissolved in deionized water at a mass ratio of 96.4:1.5:0.5:1.6 to form a negative electrode slurry, where a percentage of solid in the negative electrode slurry was 54wt%. Copper foil of 8 μm was used as a negative electrode current collector, and the negative electrode slurry was applied on two sides of the negative electrode current collector with a single-sided coating thickness being 50 μm to obtain a negative electrode active material layer, followed by drying at 85°C and cutting to obtain the negative electrode plate.

Preparation of separator: A polyethylene (PE) separator with a thickness of 7 μm was used.

Preparation of electrolyte: Under an atmosphere with a water content less than 10 ppm, LiPF6 was added to a non-aqueous organic solvent (in which ethylene carbonate (EC), propylene carbonate (PC), ethyl methyl carbonate (EMC), and diethyl carbonate (DEC) were at a mass ratio of 10:30:30:30) with a concentration of LiPF6 being 1 mol/L, and the solution was well mixed to obtain a basic electrolyte. Types and amounts of some other additives were shown in the following tables, and a percentage of each substance was a mass percentage calculated based on mass of the electrolyte.

Preparation of lithium-ion battery: The positive electrode plate, the separator, and the negative electrode plate were stacked in sequence, so that the separator was disposed between the positive electrode plate and the negative electrode plate for separation, followed by winding to obtain an electrode assembly. The electrode assembly was arranged in an outer packaging aluminum-plastic film and was dehydrated at a temperature of 80°C. After that, the above-mentioned electrolyte was injected and packaged, followed by processes such as formation, degassing, and trimming, so that the lithium-ion battery was obtained.

For other examples and comparative examples, parameters were changed based on Example 1-1, where mass of the negative electrode active material and mass of the positive electrode active material were adjusted with a length of the wound electrode plate. In the examples and comparative examples disposed in this application, the mass of the negative electrode active material divided by the mass of the positive electrode active material was equal to 0.55, and a retained mass of the electrolyte divided by the mass of the positive electrode active material was equal to 0.7. In addition, a percentage of the EC and a percentage of the additive in the electrolyte might be different than in Example 1. Other compositions of the electrolyte in addition to the EC and the additive included PC, EMC, and DEC of the same mass. For specific percentages of the EC and the additive, refer to the following table and related descriptions.

The following describes methods for testing various parameters in this application.

(1) Cycling performance test on the lithium-ion battery

The lithium-ion battery was placed in a 25°C thermostat and left standing for 30 minutes, so that the lithium-ion battery reached a constant temperature. The lithium-ion battery that had reached a constant temperature was charged at a constant current of 1C to a voltage of 4.2 V, charged at a constant voltage of 4.2 V to a current of 0.05C, and then discharged at a constant current of 1C to a voltage of 2.8 V. This was a charge and discharge cycle. A first discharge capacity was taken as 100%. The charge and discharge cycle was repeated until the discharge capacity decayed to 80%. and the number of cycles was recorded as an indicator to evaluate the cycling performance of the lithium-ion battery.

In addition, the cycling performance of the lithium-ion battery was tested at 45°C. The test method was the same as that in the foregoing cycling performance test at 25°C except that the temperature was different.

(2) High-temperature storage performance test for the lithium-ion battery (storage at 60°C for 1680 hours)

A: Storage at 100% SOC

The lithium-ion battery was placed in a 25°C thermostat and left standing for 30 minutes, so that the lithium-ion battery reached a constant temperature. The lithium-ion battery was charged at a constant current of 1C to 4.2 V, charged at a constant voltage to a current of 0.05C, and then discharged at a constant current of 1C to 2.8 V A discharge capacity was recorded as an initial capacity of the lithium-ion battery. The lithium-ion battery was then charged at a constant current of 0.5C to 4.2 V, and charged at a constant voltage to a current of 0.05C. Thickness of the lithium-ion battery was measured with a micrometer and recorded. The tested lithium-ion battery was put into a 60°C thermostat for storage for 1680 hours. During this period, the lithium-ion battery was taken out every other 168 hours to measure thickness (Thickness, THK for short), an open circuit voltage (Open circuit voltage, OCV for short), and impedance (Impedance, IMP for short) of the lithium-ion battery, and the lithium-ion battery was put into a 25°C thermostat, left standing for 60 minutes, and discharged at a constant current of 0.5C to 2.8 V. A discharge capacity was recorded as a residual capacity of the lithium-ion battery. The lithium-ion battery was charged at a constant current of 0.5C to 4.2 V, charged at a constant voltage to a current of 0.05C, and then discharged at a constant current of 0.5C to 2.8 V. A discharge capacity was recorded as a recoverable discharge capacity of the lithium-ion battery. A thickness swelling rate of the lithium-ion battery after storage was calculated and used as an indicator to evaluate gassing of the lithium-ion battery after storage at high temperature; and a residual capacity retention rate and a recoverable capacity retention rate of the lithium-ion battery after storage were calculated. In addition, the number of smoking and burning lithium-ion batteries during storage in 10 stored lithium-ion batteries was recorded.

$$\text{Thickness swelling rate} = (\text{Thickness after storage} - \text{Initial thickness})/\text{Initial thickness} \times 100\%.$$

$$\text{Recoverable capacity retention rate} = \text{Recoverable discharge capacity after storage}/\text{Initial discharge capacity} \times 100\%.$$

B: Storage at 50% SOC

The lithium-ion battery was placed in a 25°C thermostat and left standing for 30 minutes, so that the lithium-ion battery reached a constant temperature. The lithium-ion battery was charged at a constant current of 1C to 4.2 V, charged at a constant voltage to a current of 0.05C, and then discharged at a constant current of 1C to 2.8 V. A discharge capacity was recorded as an initial capacity of the lithium-ion battery. The lithium-ion battery was then charged at a constant current of 0.5C to 3.65 V, and charged at a constant voltage to a current of 0.05C (50% SOC). Thickness of the lithium-ion battery was measured with a micrometer and recorded. The tested lithium-ion battery was put into a 60°C thermostat for storage for 1680 hours. During this period, the lithium-ion battery was taken out every other 168 hours to measure thickness (Thickness, THK for short), an open circuit voltage (Open circuit voltage, OCV for short), and impedance (Impedance, IMP for short) of the lithium-ion battery, and the lithium-ion battery was put into a 25°C thermostat, left standing for 60 minutes, and discharged at a constant current of 0.5C to 2.8 V. A discharge capacity was recorded as a residual capacity of the lithium-ion battery. The lithium-ion battery was charged at a constant current of 0.5C to 4.2 V, charged at a constant voltage to a current of 0.05C, and then discharged at a constant current of 0.5C to 2.8 V. A discharge capacity was recorded as a recoverable discharge capacity of the lithium-ion battery. A thickness swelling rate of the lithium-ion battery after storage was calculated and used as an indicator to evaluate gassing of the lithium-ion battery after storage at high temperature; and a residual capacity retention rate and a recoverable capacity retention rate of the lithium-ion battery after storage were calculated. In addition, the number of smoking and burning lithium-ion batteries during storage in 10 stored lithium-ion batteries was recorded.

$$\text{Thickness swelling rate} = (\text{Thickness after storage} - \text{Initial thickness})/\text{Initial thickness} \times 100\%.$$

C: Storage at 0% SOC

The lithium-ion battery was placed in a 25°C thermostat and left standing for 30 minutes, so that the lithium-ion battery reached a constant temperature. The lithium-ion battery was charged at a constant current of 1C to 4.2 V, charged at a constant voltage to a current of 0.05C, and then discharged at a constant current of 1C to 2.8 V. A discharge capacity was recorded as an initial capacity of the lithium-ion battery. Thickness of the lithium-ion battery was measured with a micrometer and recorded. The tested lithium-ion battery was put into a 60°C thermostat for storage for 1680 hours. During this period, the lithium-ion battery was taken out every other 168 hours to measure thickness (Thickness, THK for short), an open circuit voltage (Open circuit voltage, OCV for short), and impedance

(Impedance, IMP for short) of the lithium-ion battery, and the lithium-ion battery was put into a 25°C thermostat, left standing for 60 minutes, charged at a constant current of 0.5C to 4.2 V, charged at a constant voltage to a current of 0.05C, and then discharged at a constant current of 0.5C to 2.8 V. A discharge capacity was recorded as a recoverable discharge capacity of the lithium-ion battery. A thickness swelling rate of the lithium-ion battery after storage was calculated and used as an indicator to evaluate gassing of the lithium-ion battery after storage at high temperature; and a recoverable capacity retention rate of the lithium-ion battery after storage was calculated. In addition, the number of smoking and burning lithium-ion batteries during storage in 10 stored lithium-ion batteries was recorded.

$$\text{Thickness swelling rate} = (\text{Thickness during storage} - \text{Initial thickness})/\text{Initial thickness} \times 100\%.$$

$$\text{Recoverable capacity retention rate} = \text{Recoverable discharge capacity during storage}/\text{Initial discharge capacity} \times 100\%.$$

(3) Overcharge test for the lithium-ion battery

The lithium-ion battery was discharged at 0.5C at 25°C to 2.8 V, charged at a constant current of 2C to 5.4 V, and then charged at a constant voltage for 3 hours. A surface temperature change of the lithium-ion battery was monitored (criteria for passing were that the battery did not catch fire, burn, or explode). 10 lithium-ion batteries were tested for each example, and a pass rate was recorded.

(4) Hot-box test

The lithium-ion battery was charged at a constant current of 0.5C at 25°C to 4.2 V, and charged at a constant voltage of 4.2 V to a current less than or equal to 0.05C. The fully charged lithium-ion battery was put in a high and low temperature box, heated to 150°C at a rate of 5°C/min, and maintained at a constant temperature of 150°C for 1 hour, and the lithium-ion battery was monitored. Criteria for passing were that the battery did not catch fire or explode. 10 batteries were tested for each example, and a pass rate was recorded.

Table 1 and Table 2 show various parameters and evaluation results in Examples 1-1 to 1-12 and Comparative Examples 1 to 4.

**Table 1**

|  | Negative electrode active material a (g) | Percentage of EC b (%) | b/a |
|---|---|---|---|
| Example 1-1 | 5.5 | 10 | 1.82 |
| Example 1-2 | 5.5 | 16.5 | 3.00 |
| Example 1-3 | 5.5 | 20 | 3.64 |
| Example 1-4 | 5.5 | 25 | 4.55 |
| Example 1-5 | 5.5 | 35 | 6.36 |
| Example 1-6 | 4 | 16.5 | 4.13 |
| Example 1-7 | 8.5 | 16.5 | 1.94 |
| Example 1-8 | 10 | 16.5 | 1.65 |
| Example 1-9 | 4 | 25 | 6.25 |
| Example 1-10 | 8.5 | 25 | 2.94 |
| Example 1-11 | 10 | 25 | 2.50 |
| Example 1-12 | 8.5 | 37.5 | 4.41 |
| Comparative Example 1 | 5.5 | 7.5 | 1.36 |
| Comparative Example 2 | 8.5 | 10 | 1.18 |

(continued)

|  | Negative electrode active material a (g) | Percentage of EC b (%) | b/a |
|---|---|---|---|
| Comparative Example 3 | 10 | 10 | 1.00 |
| Comparative Example 4 | 5.5 | 37.5 | 6.82 |

## Table 2

| | Number of cycles at 25°C | Number of cycles at 45°C | Thickness swelling rate (%) after storage at 100% SOC at 60°C for 1680 hours | Thickness swelling rate (%) after storage at 50% SOC at 60°C for 1680 hours | Thickness swelling rate (%) after storage at 0% SOC at 60°C for 1680 hours | Recoverable capacity retention rate (%) after storage at 100% SOC at 60°C for 1680 hours | Recoverable capacity retention rate (%) after storage at 0% SOC at 60°C for 1680 hours | Number of burnt battery cells after storage at 50% SOC at 60°C for 1680 hours (a total of 10 batteries were tested) |
|---|---|---|---|---|---|---|---|---|
| Example 1-1 | 402 | 236 | 17 | 19 | 18 | 85 | 82 | 3 |
| Example 1-2 | 592 | 382 | 19 | 13 | 12 | 90 | 85 | 1 |
| Example 1-3 | 617 | 379 | 18 | 11 | 9 | 91 | 85 | 1 |
| Example 1-4 | 620 | 380 | 19 | 10 | 8 | 91 | 86 | 1 |
| Example 1-5 | 610 | 378 | 20 | 12 | 10 | 88 | 85 | 1 |
| Example 1-6 | 602 | 387 | 17 | 12 | 12 | 90 | 86 | 1 |
| Example 1-7 | 411 | 264 | 17 | 14 | 12 | 88 | 81 | 3 |
| Example 1-8 | 402 | 253 | 24 | 15 | 15 | 88 | 82 | 2 |
| Example 1-9 | 612 | 389 | 20 | 10 | 10 | 90 | 88 | 1 |
| Example 1-10 | 645 | 397 | 15 | 12 | 10 | 91 | 89 | 1 |
| Example 1-11 | 600 | 385 | 19 | 12 | 10 | 91 | 86 | 1 |
| Example 1-12 | 631 | 388 | 28 | 12 | 10 | 90 | 86 | 1 |
| Comparative Example 1 | 301 | 218 | 20 | 30 | 26 | 80 | 75 | 5 |
| Comparative Example 2 | 311 | 223 | 22 | 31 | 18 | 85 | 74 | 5 |

| | Number of cycles at 25°C | Number of cycles at 45°C | Thickness swelling rate (%) after storage at 100% SOC at 60°C for 1680 hours | Thickness swelling rate (%) after storage at 50% SOC at 60°C for 1680 hours | Thickness swelling rate (%) after storage at 0% SOC at 60°C for 1680 hours | Recoverable capacity retention rate (%) after storage at 100% SOC at 60°C for 1680 hours | Recoverable capacity retention rate (%) after storage at 0% SOC at 60°C for 1680 hours | Number of burnt battery cells after storage at 50% SOC at 60°C for 1680 hours (a total of 10 batteries were tested) |
|---|---|---|---|---|---|---|---|---|
| Comparative Example 3 | 275 | 188 | 21 | 32 | 30 | 75 | 70 | 6 |
| Comparative Example 4 | 545 | 361 | 60 | 29 | 22 | 75 | 75 | 5 |

According to comparison between Examples 1-1 to 1-12 and Comparative Examples 1 to 4, as the ratio b/a increased within a given range, cycling performance, high-temperature storage performance and capacity retention rates after storage at different SOCs, and safety performance of the lithium-ion batteries were significantly improved. The reason might be that the EC protected the negative electrode interface and had a relatively good passivation effect on the lithium precipitation interface of the negative electrode. However, when b/a was excessively small, the EC could not protect the negative electrode interface, and thereby adversely affecting cycling performance of the electrochemical apparatus at room temperature and high temperature, and due to a poor passivation effect on the lithium precipitation interface of the negative electrode, the storage performance and the safety performance of the electrochemical apparatus in a low state of charge were affected; or when b/a > 6.4, the cycling performance could not be further improved, the storage performance and the safety performance in the high state of charge was affected, and the reason might be that when b/a was excessively large, interface kinetic performance between the electrolyte and the negative electrode was affected, causing lithium precipitation during charging and violent reactions during storage at high temperature, causing thermal failure of the lithium-ion batteries.

Table 3 and Table 4 show various parameters and evaluation results in Example 1-2, Examples 2-1 to 2-11 and Comparative Examples 5 and 6. In examples and comparative examples in the following table, mass of the negative electrode active material was 5.5 g.

**Table 3**

| | b/a | Percentage of VC m (%) | Percentage of FEC n (%) | c=m+n | c/a |
|---|---|---|---|---|---|
| Example 1-2 | 3 | 0 | 0 | 0 | 0 |
| Example 2-1 | 3 | 0 | 0.006 | 0.006 | 0.001 |
| Example 2-2 | 3 | 0.005 | 0.006 | 0.011 | 0.002 |
| Example 2-3 | 3 | 0 | 0.1 | 0.1 | 0.01 |
| Example 2-4 | 3 | 0.1 | 0.5 | 0.6 | 0.1 |
| Example 2-5 | 3 | 0.3 | 0.8 | 1.1 | 0.2 |

(continued)

| | b/a | Percentage of VC m (%) | Percentage of FEC n (%) | c=m+n | c/a |
|---|---|---|---|---|---|
| Example 2-6 | 3 | 0.8 | 0.3 | 1.1 | 0.2 |
| Example 2-7 | 3 | 0.3 | 1.4 | 1.7 | 0.3 |
| Example 2-8 | 3 | 0.3 | 1.7 | 2.0 | 0.36 |
| Example 2-9 | 3 | 0.5 | 1.7 | 2.2 | 0.4 |
| Example 2-10 | 3 | 0.5 | 2.3 | 2.8 | 0.5 |
| Example 2-11 | 6.36 | 0.3 | 0.8 | 1.1 | 0.2 |
| Comparative Example 5 | 0 | 0 | 0 | 0 | 0 |
| Comparative Example 6 | 1.36 | 0.3 | 0.8 | 1.1 | 0.2 |

| | b/a | Percentage of VC m (%) | Percentage of FEC n (%) | c=m+n | c/a |
|---|---|---|---|---|---|

## Table 4

| | Number of cycles at 25°C | Number of cycles at 45°C | Thickness swelling rate (%) after storage at 100% SOC at 60°C for 1680 hours | Thickness swelling rate (%) after storage at 50% SOC at 60°C for 1680 hours | Thickness swelling rate (%) after storage at 0% SOC at 60°C for 1680 hours | Recoverable capacity retention rate (%) after storage at 100% SOC at 60°C for 1680 hours | Recoverable capacity retention rate (%) after storage at 0% SOC at 60°C for 1680 hours | Number of burnt battery cells after storage at 50% SOC at 60°C for 1680 hours (a total of 10 batteries were tested) |
|---|---|---|---|---|---|---|---|---|
| Example 1-2 | 592 | 382 | 20 | 13 | 12 | 90 | 85 | 1 |
| Example 2-1 | 595 | 389 | 19 | 12 | 12 | 91 | 86 | 1 |
| Example 2-2 | 603 | 403 | 18 | 11 | 11 | 92 | 87 | 1 |
| Example 2-3 | 621 | 432 | 20 | 10 | 10 | 93 | 88 | 0 |
| Example 2-4 | 731 | 597 | 15 | 9 | 9 | 94 | 89 | 0 |
| Example 2-5 | 862 | 679 | 10 | 7 | 7 | 96 | 92 | 0 |
| Example 2-6 | 843 | 681 | 10 | 11 | 10 | 93 | 90 | 0 |
| Example 2-7 | 885 | 691 | 8 | 5 | 5 | 96.5 | 95 | 0 |
| Example 2-8 | 895 | 699 | 10 | 5 | 4 | 95 | 95 | 0 |
| Example 2-9 | 911 | 735 | 12 | 8 | 8 | 94 | 90 | 2 |
| Example 2-10 | 901 | 739 | 15 | 20 | 10 | 91 | 75 | 8 |
| Example 2-11 | 707 | 528 | 20 | 9 | 8 | 90 | 88 | 2 |
| Comparative Example 5 | 118 | 74 | 59 | 73 | 121 | 64 | 51 | 10 |
| Comparative Example 6 | 501 | 388 | 16 | 17 | 12 | 80 | 79 | 3 |

According to comparison between Comparative Examples 5 and 6, Example 1-2, and Examples 2-1 to 2-11, addition of a given amount of the solvent EC and carbonate VC or FEC to the electrolyte could significantly improve cycling performance, high-temperature storage performance, a capacity retention rate after storage, and safety performance of the lithium-ion battery compared with addition of no additive VC or additive FEC or addition of only half the amount of the additive VC and additive FEC. This was mainly because VC and FEC could well repair damaged SEI at the negative electrode interface during storage and suppress a side reaction and lithium deposition at the negative electrode. When the percentage of VC was less than that of FEC, the high-temperature storage performance and the capacity retention rate during storage were better. The reason might be that the electrolyte formed a composite interface protection film with lower impedance on an electrode surface at such concentration, thereby reducing consumption of active lithium after storage. In addition, when percentages of VC and FEC were excessively great, impedance of the negative electrode interface was excessively great, there was excessive residue after formation, and oxidization and gassing were likely to occur at the positive electrode interface, affecting charging performance after storage and also causing gassing after storage and potential safety hazards.

Table 5 and Table 6 show various parameters and evaluation results in Example 2-6, Examples 3-1 to 3-12, and Comparative Examples 5 and 7. In examples and comparative examples in the following table, amounts of the positive electrode active material and the negative electrode active material were the same as those in Example 2-6.

**Table 5**

| | b/a | c/a | Percentage (%) of sulfur-oxygen double bond-containing compound/ Mass (g) of positive electrode active material | | |
| --- | --- | --- | --- | --- | --- |
| | | | d(PS)/e | d(DTD)/e | d(BS)/e |
| Comparative Example 5 | 0 | 0 | 0 | 0 | 0 |
| Comparative Example 7 | 0 | 0 | 0.4 | 0 | 0 |
| Example 2-6 | 3 | 0.2 | 0 | 0 | 0 |
| Example 3-1 | 3 | 0.2 | 0.01 | 0 | 0 |
| Example 3-2 | 3 | 0.2 | 0.09 | 0 | 0 |
| Example 3-3 | 3 | 0.2 | 0.1 | 0 | 0 |
| Example 3-4 | 3 | 0.2 | 0.2 | 0 | 0 |
| Example 3-5 | 3 | 0.2 | 0.3 | 0 | 0 |
| Example 3-6 | 3 | 0.2 | 0.4 | 0 | 0 |
| Example 3-7 | 3 | 0.2 | 0.6 | 0 | 0 |
| Example 3-8 | 3 | 0.2 | 0.7 | 0 | 0 |
| Example 3-9 | 3 | 0.2 | 1 | 0 | 0 |
| Example 3-10 | 3 | 0.2 | 0 | 0.4 | 0 |
| Example 3-11 | 3 | 0.2 | 0 | 0 | 0.4 |
| Example 3-12 | 3 | 0.2 | 0.4 | 0.1 | 0 |

## Table 6

| | Number of cycles at 25°C | Number of cycles at 45°C | Thickness swelling rate (%) after storage at 100% SOC at 60°C for 1680 hours | Thickness swelling rate (%) after storage at 50% SOC at 60°C for 1680 hours | Thickness swelling rate (%) after storage at 0% SOC at 60°C for 1680 hours | Recoverable capacity retention rate (%) after storage at 100% SOC at 60°C for 1680 hours | Recoverable capacity retention rate (%) after storage at 0% SOC at 60°C for 1680 hours | Number of burnt battery cells after storage at 50% SOC at 60°C for 1680 hours (a total of 10 batteries were tested) |
|---|---|---|---|---|---|---|---|---|
| Comparative Example 5 | 118 | 74 | 59 | 73 | 121 | 64 | 51 | 10 |
| Comparative Example 7 | 415 | 279 | 17 | 12 | 14 | 85 | 81 | 3 |
| Example 2-6 | 862 | 679 | 10 | 7 | 7 | 96 | 92 | 0 |
| Example 3-1 | 896 | 585 | 8 | 5 | 5 | 96 | 93 | 0 |
| Example 3-2 | 905 | 605 | 8 | 5 | 4 | 96 | 94 | 0 |
| Example 3-3 | 932 | 648 | 6 | 4 | 4 | 97 | 94 | 0 |
| Example 3-4 | 1097 | 896 | 4 | 3 | 4 | 97 | 95 | 0 |
| Example 3-5 | 1293 | 1019 | 3 | 3 | 3 | 98 | 96 | 0 |
| Example 3-6 | 1328 | 1037 | 2 | 2 | 2 | 98 | 97 | 0 |
| Example 3-7 | 1343 | 1049 | 2 | 2 | 2 | 97 | 95 | 0 |
| Example 3-8 | 1337 | 1043 | 2 | 4 | 4 | 96 | 92 | 2 |
| Example 3-9 | 1277 | 989 | 2 | 12 | 13 | 91 | 80 | 10 |
| Example 3-10 | 1388 | 1142 | 2 | 2 | 2 | 97 | 98 | 0 |
| Example 3-11 | 1323 | 1028 | 2 | 2 | 2 | 97 | 98 | 0 |
| Example 3-12 | 1508 | 1187 | 2 | 2 | 2 | 98 | 98 | 0 |

According to comparison between Example 2-6, Examples 3-1 to 3-12, and Comparative Examples 5 and 7, addition of a given amount of the solvent EC, carbonate, and the sulfur-oxygen double bond-containing compound to the electrolyte significantly improved performance such as cycling performance, storage performance, and safety performance of the lithium-ion battery at different states compared with addition of only EC and one of carbonate and sulfur-oxygen double bond-containing compound. According to comparison between Example 3-1 and Example 2-6, in this system, when a mass ratio of the sulfur-oxygen double bond-containing compound to the positive electrode active material was low, performance of the lithium-ion battery was not significantly improved. According to comparison between Example 3-9, Examples 3-1 to 3-7, and Examples 3-10 to 3-12, when a mass ratio of the sulfur-oxygen double bond-containing compound to the positive electrode active material was excessively great, storage and safety performance of the battery at a high SOC was significantly affected.

Table 7 and Table 8 show various parameters and evaluation results in Example 2-6, Examples 4-1 to 4-13, and Comparative Example 5. In examples and comparative examples in the following table, amounts of the positive electrode active material and the negative electrode active material were the same as those in Example 2-6.

**Table 7**

| | b/a | c/a | Percentage of $LiPO_2F_2$ (%) | Percentage of $LiDF_2OB$ (%) | Percentage of LiFSI (%) |
|---|---|---|---|---|---|
| Comparative Example 5 | 0 | 0 | 0 | 0 | 0 |
| Example 2-6 | 3 | 0.2 | 0 | 0 | 0 |
| Example 4-1 | 3 | 0.2 | 0.01 | 0 | 0 |
| Example 4-2 | 3 | 0.2 | 0.05 | 0 | 0 |
| Example 4-3 | 3 | 0.2 | 0.1 | 0 | 0 |
| Example 4-4 | 3 | 0.2 | 0.2 | 0 | 0 |
| Example 4-5 | 3 | 0.2 | 0.3 | 0 | 0 |
| Example 4-6 | 3 | 0.2 | 0.5 | 0 | 0 |
| Example 4-7 | 3 | 0.2 | 1 | 0 | 0 |
| Example 4-8 | 3 | 0.2 | 1.1 | 0 | 0 |
| Example 4-9 | 3 | 0.2 | 1.5 | 0 | 0 |
| Example 4-10 | 3 | 0.2 | 2 | 0 | 0 |
| Example 4-11 | 3 | 0.2 | 0 | 1 | 0 |
| Example 4-12 | 3 | 0.2 | 0 | 0 | 1 |
| Example 4-13 | 3 | 0.2 | 1 | 1 | 1 |

## Table 8

| | Number of cycles at 25°C | Number of cycles at 45°C | Thickness swelling rate (%) after storage at 100% SOC at 60°C for 1680 hours | Thickness swelling rate (%) after storage at 50% SOC at 60°C for 1680 hours | Thickness swelling rate (%) after storage at 0% SOC at 60°C for 1680 hours | Recoverable capacity retention rate (%) after storage at 100% SOC at 60°C for 1680 hours | Recoverable capacity retention rate (%) after storage at 0% SOC at 60°C for 1680 hours | Number of burnt battery cells after storage at 50% SOC at 60°C for 1680 hours (a total of 10 batteries were tested) |
|---|---|---|---|---|---|---|---|---|
| Comparative Example 5 | 118 | 74 | 59 | 73 | 121 | 64 | 51 | 10 |
| Example 2-6 | 862 | 679 | 10 | 7 | 7 | 96 | 92 | 0 |
| Example 4-1 | 871 | 684 | 9 | 6 | 5 | 96 | 92 | 0 |
| Example 4-2 | 901 | 599 | 9 | 5 | 5 | 97 | 93 | 0 |
| Example 4-3 | 923 | 632 | 8 | 5 | 5 | 98 | 94 | 0 |
| Example 4-4 | 968 | 679 | 5 | 4 | 4 | 98 | 94 | 0 |

| | Number of cycles at 25°C | Number of cycles at 45°C | Thickness swelling rate (%) after storage at 100% SOC at 60°C for 1680 hours | Thickness swelling rate (%) after storage at 50% SOC at 60°C for 1680 hours | Thickness swelling rate (%) after storage at 0% SOC at 60°C for 1680 hours | Recoverable capacity retention rate (%) after storage at 100% SOC at 60°C for 1680 hours | Recoverable capacity retention rate (%) after storage at 0% SOC at 60°C for 1680 hours | Number of burnt battery cells after storage at 50% SOC at 60°C for 1680 hours (a total of 10 batteries were tested) |
|---|---|---|---|---|---|---|---|---|
| Example 4-5 | 1123 | 902 | 4 | 3 | 3 | 99 | 95 | 0 |
| Example 4-6 | 1357 | 1000 | 3 | 2 | 2 | 99 | 95 | 0 |
| Example 4-7 | 1403 | 1052 | 3 | 2 | 2 | 99 | 95 | 0 |
| Example 4-8 | 1444 | 1076 | 3 | 2 | 2 | 98 | 95 | 0 |
| Example 4-9 | 1438 | 1051 | 3 | 2 | 2 | 96 | 95 | 0 |
| Example 4-10 | 1377 | 1004 | 3 | 2 | 2 | 96 | 94 | 0 |
| Example 4-11 | 1496 | 1169 | 3 | 2 | 2 | 97 | 94 | 0 |
| Example 4-12 | 1389 | 1137 | 2 | 2 | 2 | 97 | 95 | 0 |
| Example 4-13 | 1635 | 1269 | 2 | 2 | 2 | 98 | 96 | 0 |

According to comparison between Example 2-6, Examples 4-1 to 4-13, and Comparative Example 5, addition of a given amount of the solvent EC and lithium salt to the electrolyte could significantly improve cycling performance, high-temperature storage performance, and safety performance of the lithium-ion battery compared with addition of no lithium salt. This was mainly because the lithium salt formed a SEI film and a CEI film with low impedance on surfaces of positive and negative electrodes, improving charging performance and reducing side reactions caused by lithium precipitation. In addition, the stable protection film could effectively reduce side reactions between the electrolyte and the positive and negative electrodes during storage and cycling while reducing consumption of active lithium and improving a capacity retention rate.

Table 9 and Table 10 show various parameters and evaluation results in Example 2-6, Examples 5-1 to 5-13, and Comparative Examples 5 and 8. In examples and comparative examples in the following table, percentages of the positive electrode active material and the negative electrode active material were the same as those in Example 2-6.

**Table 9**

| | b/a | c/a | Percentage of HTCN (%) | Percentage of AND (%) | Percentage of DENE (%) | Percentage of 1,2,3-tris(2-cyanoethoxy)propane (%) |
|---|---|---|---|---|---|---|
| Comparative Example 5 | 0 | 0 | 0 | 0 | 0 | 0 |
| Comparative Example 8 | 0 | 0.2 | 2 | 0 | 0 | 0 |
| Example 2-6 | 3 | 0.2 | 0 | 0 | 0 | 0 |
| Example 5-1 | 3 | 0.2 | 0.1 | 0 | 0 | 0 |
| Example 5-2 | 3 | 0.2 | 1 | 0 | 0 | 0 |
| Example 5-3 | 3 | 0.2 | 2 | 0 | 0 | 0 |
| Example 5-4 | 3 | 0.2 | 3 | 0 | 0 | 0 |
| Example 5-5 | 3 | 0.2 | 4 | 0 | 0 | 0 |
| Example 5-6 | 3 | 0.2 | 5 | 0 | 0 | 0 |
| Example 5-7 | 3 | 0.2 | 6 | 0 | 0 | 0 |
| Example 5-8 | 3 | 0.2 | 0 | 2 | 0 | 0 |

| | b/a | c/a | Percentage of HTCN (%) | Percentage of AND (%) | Percentage of DENE (%) | Percentage of 1,2,3-tris(2-cyanoethoxy)propane (%) |
|---|---|---|---|---|---|---|
| Example 5-9 | 3 | 0.2 | 0 | 0 | 2 | 0 |
| Example 5-10 | 3 | 0.2 | 0 | 0 | 0 | 2 |
| Example 5-11 | 3 | 0.2 | 1 | 1 | 0 | 0 |
| Example 5-12 | 3 | 0.2 | 1 | 0 | 1 | 0 |
| Example 5-13 | 3 | 0.2 | 1 | 1 | 1 | 1 |

**Table 10**

| | Thickness swelling rate (%) after storage at 100% SOC at 60°C for 1680 hours | Recoverable capacity retention rate (%) after storage at 100% SOC at 60°C for 1680 hours | Number of batteries passing 1h hot-box test at 150°C (a total of 10 batteries were tested) | Number of batteries passing 2C-5.4 V overcharge test (a total of 10 batteries were tested) |
|---|---|---|---|---|
| Comparative Example 5 | 59 | 64 | 0 | 0 |
| Comparative Example 8 | 15 | 75 | 6 | 7 |
| Example 2-6 | 10 | 96 | 4 | 4 |
| Example 5-1 | 8 | 96 | 4 | 7 |
| Example 5-2 | 5 | 97 | 7 | 8 |
| Example 5-3 | 3 | 98 | 10 | 10 |
| Example 5-4 | 3 | 98 | 10 | 10 |
| Example 5-5 | 3 | 98 | 10 | 10 |
| Example 5-6 | 3 | 97 | 10 | 10 |
| Example 5-7 | 3 | 96 | 10 | 10 |
| Example 5-8 | 3 | 97 | 10 | 10 |

(continued)

| | Thickness swelling rate (%) after storage at 100% SOC at 60°C for 1680 hours | Recoverable capacity retention rate (%) after storage at 100% SOC at 60°C for 1680 hours | Number of batteries passing 1h hot-box test at 150°C (a total of 10 batteries were tested) | Number of batteries passing 2C-5.4 V overcharge test (a total of 10 batteries were tested) |
|---|---|---|---|---|
| Example 5-9 | 3 | 97 | 10 | 10 |
| Example 5-10 | 3 | 97 | 10 | 10 |
| Example 5-11 | 3 | 98 | 10 | 10 |
| Example 5-12 | 3 | 98 | 10 | 10 |
| Example 5-13 | 2 | 98 | 10 | 10 |

According to comparison between Example 2-6, Examples 5-1 to 5-13, and Comparative Examples 5 and 8, addition of a given amount of the solvent EC and polynitrile compound to the electrolyte could significantly improve high-temperature storage performance and safety performance of the lithium-ion battery compared with addition of no EC or polynitrile compound or addition of only half the amount of EC and the polynitrile compound. This was mainly because the polynitrile compound could be well complexed with the positive electrode active material to reduce oxidation activity of the positive electrode material, reduce side reactions, and also prevent positive electrode transition metal from precipitating and then depositing at the negative electrode, which otherwise caused damage to the SEI film, thereby reducing gassing and improving a capacity retention rate. In addition, an advantage of using both the EC and the polynitrile compound was that the EC could suppress decomposition of the polynitrile compound at the negative electrode interface to reduce increase in impedance of the negative electrode, so that a greater amount of polynitrile compound effectively acted on the positive electrode. Passivation caused by the polynitrile compound for the positive electrode could reduce oxidation of the EC at the positive electrode interface, so that a greater amount of the EC was used to protect the negative electrode interface, thereby exerting advantages of the two substances to greatest extent and achieving optimal electrical performance.

The foregoing descriptions are only preferred examples of this application and explanations of the applied technical principles. Persons skilled in the art should understand that the related scope of disclosure in this application is not limited to the technical solutions formed by a specific combination of the foregoing technical characteristics, and should also cover other technical solutions formed by any combination of the foregoing technical characteristics or their equivalent characteristics. For example, a technical solution formed by replacement between the foregoing characteristics and technical characteristics having similar functions disclosed in this application are covered in the related scope of disclosure in this application.

**Claims**

1.  An electrochemical apparatus, comprising:

     a positive electrode plate;
     a negative electrode plate, **characterized in that**, the negative electrode plate comprises a negative electrode active material layer, and the negative electrode active material layer comprises a negative electrode active material, wherein a mass of the negative electrode active material is a g;
     a separator disposed between the positive electrode plate and the negative electrode plate; and
     an electrolyte comprising ethylene carbonate, and based on a mass of the electrolyte, a mass percentage of the ethylene carbonate is b%, and $1.6 \leq b/a \leq 6.4$.

2.  The electrochemical apparatus according to claim 1, **characterized in that**, $1 \leq b \leq 25$.

3.  The electrochemical apparatus according to claim 1, **characterized in that**, the electrolyte further comprises at least one selected from the group consisting of vinylene carbonate and fluoroethylene carbonate, and based on the mass of the electrolyte, a mass percentage of vinylene carbonate is m%, a mass percentage of fluoroethylene carbonate is n%, wherein m + n = c, and $0.01 \leq c < 2$.

4. The electrochemical apparatus according to claim 3, **characterized in that**, the electrochemical apparatus satisfies at least one of formula (i)-(iv):

(i) $0 \leq m < 2$;
(ii) $0 \leq n < 2$;
(iii) m < n; and
(iv) $0.001 \leq c/a \leq 0.36$.

5. The electrochemical apparatus according to claim 1, **characterized in that**, the electrolyte further comprises a sulfur-oxygen double bond-containing compound, and the sulfur-oxygen double bond-containing compound comprises at least one selected from the group consisting of 1,3-propane sultone, 1,4-butane sultone, ethylene sulfate, methylene methane disulfonate, 1,3-propane disulfonic anhydride, 2-methyl butane sultone, and propenyl-1,3-sultone.

6. The electrochemical apparatus according to claim 5, **characterized in that**, based on the mass of the electrolyte, a mass percentage of the sulfur-oxygen double bond-containing compound is d%, the positive electrode plate comprises a positive electrode active material layer, the positive electrode active material layer comprises a positive electrode active material, a mass of the positive electrode active material is e g, and $0.1 \leq d/e \leq 0.6$.

7. The electrochemical apparatus according to claim 6, **characterized in that**, the positive electrode active material comprises cobalt.

8. The electrochemical apparatus according to claim 1, **characterized in that**, the electrolyte further comprises a lithium salt, the lithium salt comprises at least one selected from the group consisting of lithium difluorophosphate, lithium difluorooxalatoborate, lithium bisoxalatoborate, lithium bis(fluorosulfonyl)imide, lithium bistrifluoromethanesulfonimide, lithium tetrafluoroborate, lithium tetraborate, lithium borate, and lithium trifluoromethanesulfonate; and based on the mass of the electrolyte, a mass percentage of the lithium salt ranges from 0.01% to 3%.

9. The electrochemical apparatus according to claim 1, **characterized in that**, the electrolyte further comprises a polynitrile compound, and the polynitrile compound comprises at least one selected from the group consisting of succinonitrile, adiponitrile, 1,2-bis(cyanoethoxy)ethane, 1,4-dicyano-2-butene, 1,3,6-hexanetricarbonitrile, and 1,2,3-tris(2-cyanoethoxy)propane; and based on the mass of the electrolyte, a mass percentage of the polynitrile compound ranges from 0.01% to 6%.

10. An electronic apparatus comprising the electrochemical apparatus according to any one of claims 1-9.

Europäisches
Patentamt

European
Patent Office

Office européen
des brevets

# EUROPEAN SEARCH REPORT

Application Number

EP 22 19 3281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 206 296 A (NINGDE AMPEREX TECHNOLOGY LTD) 3 August 2021 (2021-08-03) * claims 1-8 * | 1-10 | INV.<br>H01M4/505<br>H01M10/0525<br>H01M4/525 |
| A | US 2007/178386 A1 (TAKEDA YUKIFUMI [JP]) 2 August 2007 (2007-08-02) * paragraph [0018] – paragraph [0120] * | 1-10 | H01M10/0568<br>H01M10/0567<br>H01M10/0569 |
| A | CN 102 280 662 B (DONGGUAN NEW ENERGY TECHNOLOGY CO., LTD.) 30 March 2016 (2016-03-30) * paragraph [0007] – paragraph [0059] * | 1-10 | |

**TECHNICAL FIELDS SEARCHED (IPC)**

H01M

The present search report has been drawn up for all claims

| Place of search | Date of completion of the search | Examiner |
|---|---|---|
| The Hague | 24 February 2023 | Pipoli, Tiziana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 3281

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2023

| Patent document cited in search report | | Publication date | Patent family member(s) | | Publication date |
|---|---|---|---|---|---|
| CN 113206296 | A | 03-08-2021 | CN | 113206296 A | 03-08-2021 |
| | | | WO | 2022227450 A1 | 03-11-2022 |
| US 2007178386 | A1 | 02-08-2007 | CN | 101034764 A | 12-09-2007 |
| | | | JP | 2007207617 A | 16-08-2007 |
| | | | KR | 20070079574 A | 07-08-2007 |
| | | | US | 2007178386 A1 | 02-08-2007 |
| CN 102280662 | B | 30-03-2016 | NONE | | |

EPO FORM P0459